# FASCICULE DE BREVET EUROPEEN

(11) **EP 2 791 643 B1**
(45) Date de publication et mention de la délivrance du brevet: **16.01.2019**
(21) Numéro de dépôt: 12806587.7
(22) Date de dépôt: 28.11.2012
(51) Int. Cl.: G01M 11/02

(54) **SYSTÈME ET PROCÉDÉ DE LECTURE OPTIQUE DE MARQUAGES IMPRIMÉS SUR UNE FACE D'UNE LENTILLE OPHTALMIQUE**
SYSTEM UND VERFAHREN ZUM OPTISCHEN LESEN VON MARKIERUNGEN AUF DER OBERFLÄCHE EINER KONTAKTLINSE
SYSTEM AND METHOD FOR OPTICAL READING OF MARKINGS PRINTED ON A FACE OF AN OPHTHALMIC LENS

(30) Priorité: 15.12.2011 FR 1161729
(43) Date de publication de la demande: 22.10.2014
(73) Titulaire: Essilor International, 94220 Charenton-le-Pont (FR)
(72) Inventeur: DUBOIS, Frédéric, F-94220 Charenton-le-Pont (FR)
(74) Mandataire: Santarelli
(86) Numéro de dépôt international: PCT/FR2012/052739
(87) Numéro de publication internationale: WO 2013/088021

(56) Documents cités:
- WO-A1-95/01558
- WO-A1-95/19558
- WO-A1-03/048716
- WO-A1-03/048717
- DE-A1- 10 333 426
- US-A1- 2005 259 247

## Description

L'invention a trait au domaine général du marquage des lentilles ophtalmiques, en particulier aux systèmes et procédés de lecture optique des marquages imprimés sur une face d'une lentille ophtalmique.

Les procédés de fabrication généralement employés pour obtenir une lentille finie et taillée à la forme d'une monture particulière comportent typiquement des étapes au cours desquelles la lentille ophtalmique reçoit sur sa surface des marquages.

Par exemple, la lentille peut recevoir des points ou des croix identifiant un point particulier (par exemple le centre optique de la lentille ophtalmique ou le point de référence de prisme pour un verre progressif), des traits d'axes (par exemple pour indiquer l'axe horizontal selon lequel l'astigmatisme est corrigé), les formes délimitant une zone particulière (par exemple, zone de vision de près ou zone de vision de loin dans le cas des lentilles ophtalmiques progressives).

De même, il peut être nécessaire d'effectuer des marquages relatifs à l'identification de la lentille ophtalmique ou autres marquages commerciaux.

Ces marquages sont généralement réalisés par des microgravures ou par des marquages imprimés, dits marquages temporaires (bien souvent de couleur jaune).

On connaît de la demande de brevet français FR 2 871 100 des procédés de marquages imprimés de lentille ophtalmique.

Tous ces marquages nécessitent des opérations de centrage qui aboutissent généralement au positionnement bien souvent manuel, sur la lentille ophtalmique, d'un pion de centrage et d'entraînement (ou de positionnement) qui permet ultérieurement de positionner correctement la lentille (aussi appelée verre) dans une machine de détourage ou de surfaçage de cette lentille.

Il est nécessaire, avant ou après une opération par exemple de détourage de la lentille, que les marquages imprimés et/ou les microgravures soient correctement positionnés sur la lentille ophtalmique.

La demande de brevet français FR 2 825 466 décrit un dispositif de détection automatique de caractéristiques d'un verre ophtalmique, notamment de marquages imprimés et/ou de microgravures, comportant un dispositif de capture d'images, une source de lumière et un support pour recevoir la lentille ophtalmique. Le dispositif de capture d'images, la source de lumière et le support sont configurés pour que, quand la lentille ophtalmique est reçue par le support, la source de lumière éclaire la lentille en rendant les marquages visibles au dispositif de capture d'images.

La demande internationale WO 03/048717 décrit un système conventionnel de lecture optique de marquages imprimés sur une face d'une lentille ophtalmique, comportant un dispositif de capture d'images, une source de lumière et un support pour recevoir la lentille ophtalmique. Le dispositif de capture d'images, la source de lumière et le support sont configurés pour que, quand la lentille ophtalmique est reçue par le support, la source de lumière éclaire la lentille et rend les marquages visibles au dispositif de capture d'images.

L'invention vise à fournir un système de lecture optique de marquages imprimés sur une face d'une lentille ophtalmique, qui soit encore plus performant et qui soit simple et commode à mettre en oeuvre et économique,

L'invention a ainsi pour objet, sous un premier aspect, un système de lecture optique de marquages Imprimés sur une face d'une lentille ophtalmique, ledit système comportant :
- un dispositif de capture d'images ;
- une source de lumière ;
- un support pour recevoir ladite lentille ophtalmique ;
avec ledit dispositif de capture d'images et ladite source de lumière et ledit support qui sont configurés pour que, quand ladite lentille ophtalmique est reçue par ledit support, ladite source de lumière éclaire ladite lentille en rendant lesdits marquages visibles audit dispositif de capture d'images ; caractérisé en ce que ledit système comporte en outre un élément mobile sur lequel est fixée ladite source de lumière, lequel élément mobile admet une position de travail dans laquelle ledit élément mobile entoure au moins partiellement ledit support et dans laquelle ladite source de lumière regarde ledit support, et une position escamotée dans laquelle ledit élément mobile est à distance dudit support, avec ladite source de lumière et ledit support qui sont configurés pour que, dans ladite position de travail, quand ladite lentille ophtalmique est reçue par le ledit support avec un élément masquant qui recouvre lesdits marquages, ladite source lumière éclaire une tranche de ladite lentille de sorte que la lumière pénètre dans une masse de ladite lentille et atteigne ledit élément masquant au travers de ladite lentille.

Le système de lecture optique selon l'invention permet au dispositif de capture d'images de déterminer un éventuel écart entre le support configuré pour recevoir la lentille ophtalmique et les marquages imprimés sur cette lentille.

La connaissance de cet éventuel écart permet de déterminer si ce support est correctement centré par rapport à la lentille ophtalmique, en particulier ici par rapport aux marquages imprimés.

Par conséquent, le système de lecture optique selon l'invention permet de déterminer si les marquages imprimés sont correctement positionnés par rapport à un point de référence de la lentille ophtalmique.

En fonction du résultat obtenu qu'est la valeur de l'éventuel écart, le système peut générer une alerte représentative d'une information relative à l'écart (en translation, en rotation ou en distance radiale), voire directement prendre des mesures correctives en coopération avec une machine de détourage ou de surfaçage.

Dans le cas où la lentille ophtalmique présente également des microgravures et qu'un éventuel écart entre ces microgravures et les marquages imprimés sur cette même lentille ophtalmique est détecté, il est alors possible, grâce à l'écart que permet de lire le système de lecture selon l'invention, de déduire un éventuel écart entre le support configuré pour recevoir la lentille ophtalmique et ses microgravures.

La connaissance de ces éventuels écarts significatifs d'un mauvais positionnement des marquages imprimés sur la lentille, voire de la lentille sur le support, voir encore des marquages imprimés par rapport aux microgravures sur la lentille, est particulièrement avantageuse pour la définition, ou la redéfinition, des paramètres de détourage ou de surfaçage (en d'autres termes d'usinage), en fonction du décalage que représentent ces éventuels écarts.

On observera que le système de lecture optique selon l'invention permet de lire les marquages imprimés sur la face de la lentille ophtalmique alors même que cette lentille est reçue dans le support et que ces marquages imprimés sont masqués.

En effet, dans la position de travail, il est possible de lire les marquages imprimés malgré l'élément masquant par rétrodiffusion de la lumière, laquelle rétrodiffusion est captée par le dispositif de capture d'images.

On observera également que dans la position escamotée, l'élément mobile est configuré pour qu'il soit possible de mettre en place sur le support la lentille dans une position prédéterminée, ou de l'en retirer.

Bien entendu, c'est sur la base d'une connaissance de la position du dispositif de capture d'images et du support configuré pour recevoir la lentille ophtalmique l'un par rapport à l'autre que le système de lecture optique selon l'invention permet de déterminer un éventuel écart entre les marquages imprimés et ce support.

Selon des caractéristiques préférées, simples, commodes et économiques du système de lecture optique selon l'invention :
- ladite source de lumière est formée par au moins une rampe lumineuse inclinée par rapport à ladite tranche de ladite lentille en fonction d'une inclinaison générale de ladite face de ladite lentille pourvue desdits marquages imprimés ;
- ladite source de lumière est formée par deux rampes lumineuses disposées en regard l'une de l'autre et de part et d'autre de ladite face de ladite lentille pourvue desdits marquages imprimés ;
- ladite source de lumière est formée par une rampe lumineuse annulaire disposée autour de ladite lentille ;
- ledit dispositif de capture d'images est formé par une caméra pourvue d'un objectif et d'un capteur configuré pour capter la lumière provenant de ladite source de lumière et rétrodiffusée par ledit élément masquant ;
- ledit support pour recevoir ladite lentille ophtalmique comporte une pince de serrage admettant une position ouverte et une position fermée et comportant un espace de réception prévu pour recevoir ladite lentille ophtalmique quand ladite pince est en position ouverte ;
- ledit support pour recevoir ladite lentille ophtalmique comporte un espace de réception prévu pour recevoir au moins partiellement un pion de positionnement et de centrage sur lequel est fixée ladite lentille ophtalmique, avec ledit élément masquant qui est interposé entre ledit pion et ladite lentille ;
- il comporte en outre une mire de référence prévue pour calibrer ledit dispositif de capture d'images ;
- ledit élément masquant est formé par un film opaque configuré pour recouvrir au moins partiellement ladite face de ladite lentille pourvue desdits marquages imprimés ;
- il comporte en outre un châssis ayant une base sur laquelle repose ledit support pour recevoir ladite lentille ainsi qu'une paroi de fond reliée à ladite base et sur laquelle est monté ledit dispositif de capture d'images, et avec ledit élément mobile qui est monté sur ledit châssis ; et/ou
- il comporte en outre un capot ayant un élément fixe ainsi que ledit élément mobile déplaçable en translation par rapport audit élément fixe, avec ledit capot qui présente des parois opaques.

L'invention a aussi pour objet, sous un deuxième aspect, un procédé de lecture optique de marquages imprimés sur une face d'une lentille ophtalmique à l'aide d'un système tel que décrit ci-dessus, comportant les étapes suivantes :
- fourniture d'une lentille ophtalmique ayant sur une face des marquages imprimés recouverts par un élément masquant ;
- dans une position escamotée d'un élément mobile dudit système où ledit élément mobile est à distance d'un support dudit système pour recevoir ladite lentille, introduction au moins partielle de ladite lentille dans ledit support ;
- déplacement dudit élément mobile de sa position escamotée à une position de travail dans laquelle une source de lumière dudit système portée par ledit élément mobile est amenée à proximité d'une tranche de ladite lentille ;
- activation de ladite source de lumière pour éclairer ladite tranche de ladite lentille de sorte que la lumière pénètre dans une masse de ladite lentille et atteigne ledit élément masquant au travers de ladite lentille ;
- capture par un dispositif de capture d'images dudit système de ladite lumière qui est rétrodiffusée par ledit élément masquant.

Le procédé selon l'invention est particulièrement performant, simple, commode et économique.

Selon des caractéristiques préférées, simples, commodes et économiques du procédé selon l'invention :
- il comporte en outre les étapes suivantes : détermination, à partir de la capture d'images, d'une valeur d'un écart de positionnement entre lesdits marquages imprimés sur ladite face de ladite lentille et ledit support ; comparaison de ladite valeur d'écart déterminée à une valeur de seuil d'écart prédéterminée ; génération d'une information caractéristique d'une alerte lorsque la valeur d'écart déterminée est supérieure ou égale à la valeur de seuil d'écart prédéterminée ;
- ladite valeur d'écart est représentative d'une distance en translation et/ou d'une distance en rotation et/ou d'une distance radiale ; et/ou
- ladite valeur d'écart est représentative d'une combinaison d'au moins deux desdites distances en translation, en rotation et radiale.

Grâce à l'invention, une redéfinition des paramètres de détourage ou de surfaçage est possible en prenant en compte le décalage représenté par l'écart entre les marquages imprimés et le support de la lentille, lequel écart est déterminé par le procédé décrit ci-dessus.

On va maintenant poursuivre l'exposé de l'invention par la description d'un exemple de réalisation, donnée ci-après à titre illustratif et non limitatif, en référence aux dessins annexés sur lesquels :
- la figure 1 représente schématiquement et partiellement, en perspective, un système de lecture optique de marquages imprimés sur une face d'une lentille ophtalmique, comportant un élément mobile en position escamotée ;
- la figure 2 représente schématiquement en vue de dessus la lentille ophtalmique visible sur la figure 1 ;
- la figure 3 représente schématiquement et partiellement, en section, un schéma de principes de fonctionnement montrant un dispositif de capture d'images, un support sur lequel est monté la lentille ophtalmique ainsi que des sources de lumière, appartenant au système illustré sur la figure 1 ;

- la figure 4 représente schématiquement, en vue de face, une source de lumière du système illustré sur la figure 1 ;
- la figure 5 représente schématiquement et partiellement, en perspective, le système illustré sur la figure 1 avec l'élément mobile en position de travail ;
- la figure 6 montre schématiquement et partiellement, en section, le système illustré sur la figure 5, avec les sources de lumière activées ;
- la figure 7 est un schéma-blocs illustrant différentes étapes de fonctionnement d'un procédé de lecture optique de marquages imprimés mis en oeuvre par le système illustré sur les figures 1 et 5 ; et
- la figure 8 est une vue schématique, en plan, d'une mire de référence pour calibrer le dispositif de capture d'images visible à la figure 3.

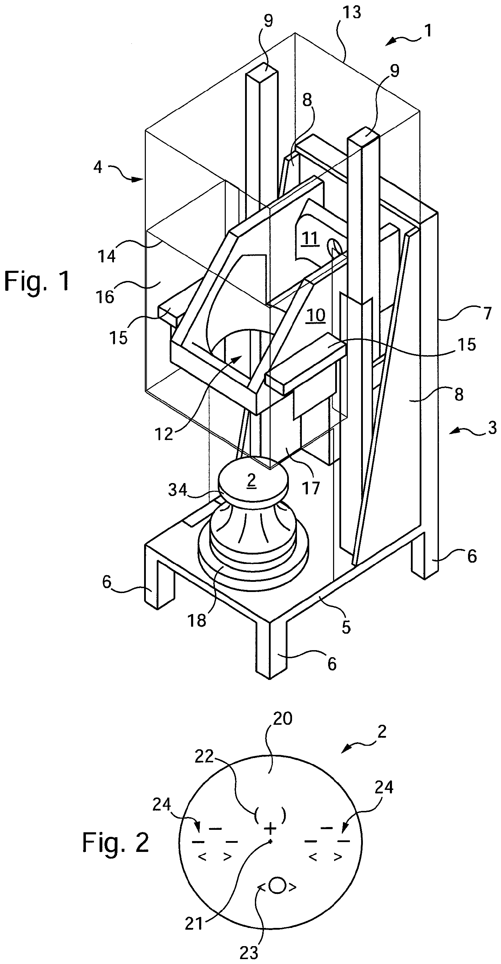

La figure 1 illustre partiellement un système de lecture optique 1 de marquages imprimés (visible à la figure 2) sur une lentille ophtalmique 2, appelée aussi verre. Il s'agit ici d'un verre semi-fini 2 avant une opération du surfaçage de ce dernier.

Le système 1 comporte un châssis 3 et un capot 4 monté à coulissement sur ce châssis 3.

Le châssis est pourvu d'une base inférieure 5 ayant quatre pieds 6 (dont trois seulement sont visibles sur la figure 1), une paroi de fond 7 s'étendant perpendiculairement à la base inférieure 5 et de deux plaques de liaison 8 en forme d'équerre qui sont reliées à la fois à la paroi de fond 7 et à la base inférieure 5.

Le système 1 comporte en outre deux poteaux de guidage 9 montés chacun sur la base inférieure 5 et s'étendant face à la paroi de fond 7.

Le système 1 comporte en outre un bâti 10 qui est fixé et monté sur la paroi de fond 7, à l'opposé de la base inférieure 5, et qui est interposé entre les deux poteaux 9.

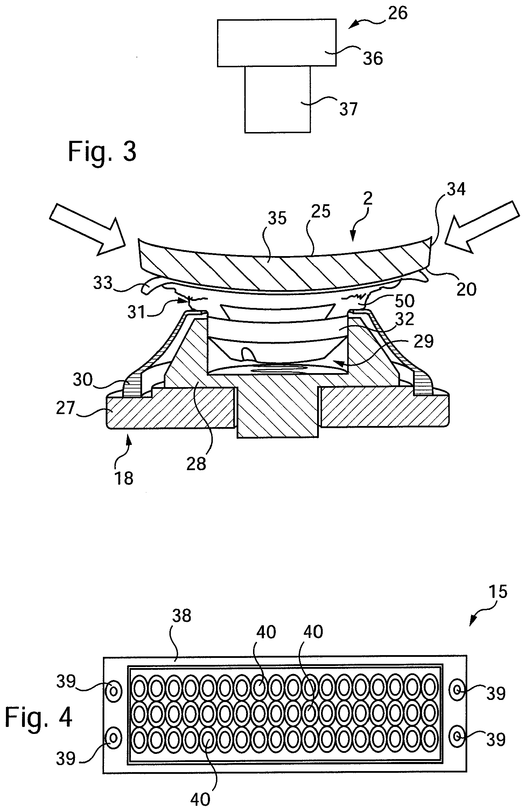

Ce bâti 10 forme un support pour un dispositif de capture d'images (visible à la figure 3).

Pour cela le bâti 10 présente une plaque de montage 11 disposée contre la paroi de fond 7 ainsi qu'une fenêtre 12 ouverte en direction de la base inférieure 5 et en surplomb de la paroi de fond 7.

Le capot 4 est pourvu d'un élément fixe 13 et d'un élément mobile 14.

L'élément fixe 13 est monté sur la paroi de fond 7 et sur les parois latérales 8 et l'élément mobile 14 est monté à coulissement en translation sur les poteaux de guidage 9 et est déplaçable par rapport à l'élément fixe 13.

L'élément mobile 14 est configuré pour admettre une position escamotée visible sur la figure 1 dans laquelle l'élément mobile 14 est au moins partiellement introduit dans un espace intérieur de l'élément fixe 13 du capot 4.

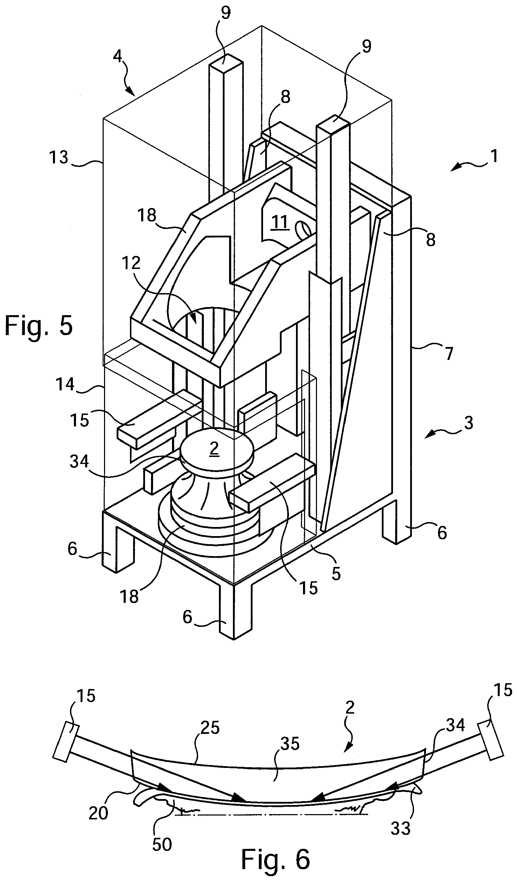

L'élément mobile 14 est en outre configuré pour admettre une position de travail (visible à la figure 5) dans laquelle l'élément mobile 14 est déployé, c'est-à-dire qu'il est en saillie de l'élément fixe 13.

Dans sa position de travail, l'élément mobile 14 est plus proche de la base inférieure 5 que dans sa position escamotée.

Le système 1 comporte en outre deux sources de lumière 15 formées ici par des rampes lumineuses à diodes électroluminescentes.

Ces rampes lumineuses 15 sont chacune fixées sur une face interne d'un côté 16, 17 de l'élément mobile 14.

Les côtés 16 et 17 sur lesquels sont fixées les rampes lumineuses 15 sont opposés et disposés de part et d'autre du bâti 10, de sorte que ces rampes 15 sont chacune sensiblement en regard d'un poteau de guidage 9.

Les rampes lumineuses 15 sont disposées de manière inclinée (comme cela est visible à la figure 6) par rapport à ces côtés 16 et 17 de l'élément mobile 14 du capot 4.

Le système 1 comporte en outre un support 18 pour recevoir la lentille ophtalmique 2.

Ce support 18 est monté sur la base inférieure 5 et est configuré pour que la lentille ophtalmique 2 soit disposée en regard de la fenêtre 12 du bâti 10 où est monté le dispositif de capture d'images.

La figure 2 montre, en vue de dessus, la lentille ophtalmique 2 prise isolément.

Cette lentille ophtalmique 2 présente une face concave, non visible sur la figure 2, et une face convexe 20 qui est pourvue de marquages imprimés 21 à 24 appelés aussi marquages temporaires.

Ces marquages représentent respectivement un point de référence 21 situé au centre de la lentille 2, une zone de vision de loin 22 située juste au-dessus du point de référence 21, une zone de vision de près 23 située en dessous du point de référence 21 et une zone 24 passant par un axe horizontal dit nez-oreille.

On va maintenant décrire plus en détail en référence à la figure 3 la configuration du support 18 avec la lentille 2 par rapport au dispositif de capture d'images 26 et par rapport à la lumière provenant des rampes lumineuses 15 lorsque l'élément mobile 14 est en position de travail.

Le support 18 est pourvu d'une base 27 et d'une pince de serrage 28 formant une bague ayant un espace de réception 29 en son centre.

Ce support 18 est en outre pourvu d'une coque de protection 30 recouvrant au moins partiellement la pince de serrage 28.

La lentille ophtalmique 8 est ici montée sur un pion de positionnement et de centrage 31 formant support.

Ce pion de positionnement et de centrage est pourvu d'une portion inférieure 32 destinée à être reçue dans l'espace de réception 29 de la pince 28 et d'une portion supérieure 50 configurée pour épouser sensiblement et au moins partiellement la forme de la face convexe 20 de la lentille ophtalmique 2.

Un élément masquant formé ici par un film opaque 33 est interposé entre cette face convexe 20 de la lentille 2 et la portion supérieure 50 du pion de positionnement et de centrage 31.

Ce film opaque 33 recouvre partiellement la face convexe 20 et masque les marquages imprimés 21 à 24 réalisés sur cette face convexe 20.

On observera ici que la lentille 2 présente une tranche 34 (périphérique) qui est ici découverte.

La lentille 2 présente en outre un volume de matière défini par la tranche 34 et les deux faces 20 et 25 que l'on nommera ici masse 35 de cette lentille 2.

La pince de serrage 28 du support 18 est configurée pour admettre une position ouverte dans laquelle il peut recevoir au moins partiellement la portion inférieure 32 du pion de positionnement et de centrage 31 et une position fermée dans laquelle il serre cette portion inférieure 32 et bloque ainsi l'ensemble formé par le pion de positionnement et de centrage 31, le film masquant opaque 33 et la lentille ophtalmique 2.

Sur la figure 3 est également illustré le dispositif de capture d'images 26 qui est ici formé par une caméra pourvue d'un capteur à transfert de charge 36 (CCD pour "*Charge-Coupled Device*" en terminologie anglo-saxonne) et d'un objectif 37.

Cette caméra 36 est configurée pour être montée, comme indiqué ci-dessus sur le bâti 10 et en particulier sur la plaque de montage 11 et est configurée pour être positionnée avec son objectif 37 au niveau de la fenêtre 12 et en regard de la face concave 25 de la lentille ophtalmique 2.

Sur la figure 3 sont également représentés des faisceaux de lumière illustrés par des flèches selon une direction prédéterminée qui montre la direction de propagation des faisceaux provenant des deux rampes lumineuses 15 avant d'atteindre la lentille ophtalmique 2, et en particulier la tranche 34 de cette lentille 2.

On voit sur la figure 3 que les rampes lumineuses 15 sont inclinées du fait de l'inclinaison des flèches. Cette inclinaison est fonction de l'inclinaison générale de la face convexe 20.

On verra plus en détail comment se propagent les faisceaux de lumière provenant des rampes lumineuses 15 dans la masse 35 de la lentille 2, en référence aux figures 5 et 6.

La figure 4 illustre, en vue de face, une rampe lumineuse 15.

Cette rampe lumineuse présente une forme rectangulaire et parallélépipédique et comporte un cadre 38 pourvu d'organes de fixation 39 prévus pour fixer cette rampe lumineuse 15 sur un côté 16 ou 17 de l'élément mobile 14.

Ce cadre 38 définit en outre un espace dans lequel est introduite une pluralité de diodes électroluminescentes 40 alignées ici suivant une répartition régulière sur trois rangées.

On va maintenant décrire, en référence aux figures 5 à 6, le système 1 de lecture optique lorsque l'élément mobile 14 est en position de travail.

Contrairement à la position escamotée où l'élément mobile 14 du capot 4 est à distance du support 18 (figure 1), dans la position de travail, cet élément mobile 14 vient recouvrir et même obstruer complètement, ou presque, le support 18 et donc la lentille ophtalmique 2 ainsi que l'espace à proximité immédiate de ce support 18.

Les rampes lumineuses 15 étant fixées sur l'élément mobile 14 du capot 4, le déplacement de cet élément mobile 14 entraîne par voie de conséquence le déplacement des rampes lumineuses 15 jusqu'à ce que ces dernières se positionnent face à la tranche 24 de la lentille 2. Ainsi, les deux rampes lumineuses 15 qui sont opposées entourent, ou couvrent, partiellement la tranche 34 de la lentille 2.

Le système 1 est configuré de telle sorte que, quand l'élément mobile 16 est en position de travail et quand la lentille 2 est reçue dans le support 18, ces rampes lumineuses 15 sont à proximité immédiate, c'est-à-dire le plus près possible, de la tranche 34 de la lentille 2 afin que les faisceaux de lumière provenant des rampes lumineuses 15 pénètrent dans la masse 35 de la lentille 2 par la tranche 34.

On notera que dans la position de travail de l'élément mobile 14, il n'y a plus aucune visibilité, ou presque, de l'intérieur du système 1, autrement dit de l'espace interne du capot 4 (vu de l'extérieur de ce système 1).

Ceci est dû au fait que les parois de côté du capot 4 et en particulier de son élément fixe 13 et de son élément mobile 14 sont opaques afin de mettre la lentille 2 complètement, ou presque, dans le noir et pour que la lumière, comme montré ci-après, soit rétrodiffusée par le film masquant opaque 33 et que cette lumière rétrodiffusée soit le plus visible possible pour la caméra 26.

On voit particulièrement bien sur la figure 6 que les rampes lumineuses 15 sont disposées de manière inclinée par rapport à la tranche 34 de la lentille 2 et que ces rampes lumineuses 15 sont situées en regard et à proximité immédiate de cette tranche 34.

Les faisceaux lumineux émis par ces rampes lumineuses 15 (représentés ici par des flèches) sont diffusants de telle sorte que la lumière provenant de ces rampes lumineuses 15 traverse la tranche 34 et pénètre dans la masse 35 de cette lentille 2.

Le fait que les sources lumineuses 15 sont près de la tranche 34 de la lentille 2 permet à l'espace entourant le support 18 et délimité par le capot 4 de ne pas être éclairé par les rampes lumineuses 15.

Ainsi, la totalité ou presque des faisceaux de lumière provenant des rampes lumineuses 15 pénètrent dans la masse 35 de la lentille pour être rétrodiffusés par le film masquant opaque 33 interposé entre la face convexe 20 de la lentille 2 et la portion supérieure 50 du pion de positionnement et de centrage 30.

On notera que dans le mode de réalisation illustré, le système 1 est pourvu de deux rampes lumineuses 15 situées de part et d'autre de la lentille 2 (c'est-à-dire que les rampes 15 sont opposées) afin que la lumière qui pénètre dans la masse 35 de la lentille 2 puisse se propager jusqu'à peu près la moitié du diamètre de cette lentille 2 suivant une direction descendante partant de la tranche 34 vers la surface convexe 20 de cette lentille 2.

Comme la lumière pénétrant dans la masse 35 de la lentille 2 est rétrodiffusée par le film masquant 33, les rayons lumineux visibles sur la figure 6 suivent simplement une direction descendante et ne sont pas réfléchis, ou presque, à l'intérieur de la masse 35 de la lentille.

On observera également que la configuration des rampes lumineuses 15 par rapport à la lentille ophtalmique 2 permet d'éclairer cette dernière avec une lumière de type rasante.

Comme indiqué précédemment, notamment en référence à la figure 3, l'objectif 37 de la caméra 26 regarde la lentille ophtalmique et donc voit la lumière rétrodiffusée par le film masquant 33.

Ainsi, une ou plusieurs images de cette lumière rétrodiffusée peut être capturée par cette caméra 26.

Par conséquent, puisque les marquages imprimés 21 à 24 sont réalisés sur la face convexe 20 de la lentille 2, face qui est éclairée par les rampes lumineuses 15 et dont la lumière est rétrodiffusée par l'élément masquant 33, ces marquages imprimés 21 à 24 sont également rétrodiffusés et donc vus par la caméra 26 et par conséquent, l'image de ces marquages imprimés 21 à 24 est capturée par cette caméra 26.

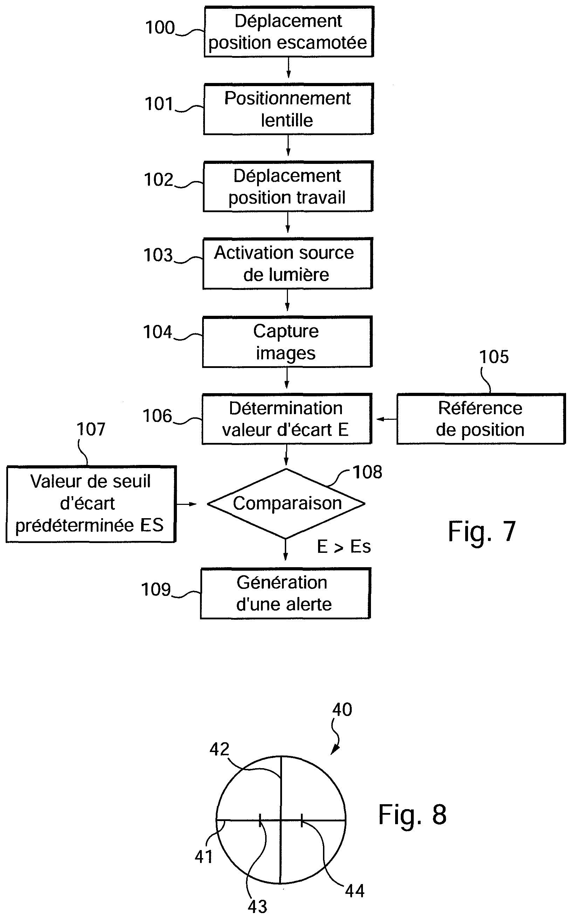

On va maintenant décrire en référence à la figure 7 les étapes de fonctionnement du procédé mises en oeuvre par le système 1 décrit ci-dessus.

Un utilisateur voulant vérifier que les marquages imprimés 21 à 24, dits marquages temporaires, sont correctement positionnés par rapport aux pions de centrage et de positionnement 31 et plus généralement par rapport au support 18 configuré pour recevoir la lentille 2 va utiliser le système 1 décrit ci-dessus de la manière après.

L'utilisateur déplace à l'étape 100 l'élément mobile 14 du capot 4 pour le mettre dans sa position escamotée afin de disposer d'un libre accès à la base inférieure 5 du châssis 3 et plus particulièrement au support 18.

L'utilisateur s'assure que la pince de serrage 28 qui forme une bague de réception est dans sa position ouverte.

L'utilisateur se fournit la lentille ophtalmique 2 montée sur le pion de positionnement et de centrage 31 avec le film masquant opaque 33 interposé entre la face convexe 20 de la lentille 2 et la portion supérieure 50 du pion 31.

A l'étape 101, l'utilisateur insère au moins partiellement la portion inférieure 32 du pion 31 dans l'espace de réception 29 de la pince de serrage 28 et met cette dernière dans sa position fermée afin de bloquer l'ensemble formé par le pion 31, le film masquant 33 et la lentille 2.

Ici, le système 1 connaît la position du support 18 et en particulier la position de la pince de serrage 28, et par conséquent, le système connaît la position du pion de positionnement et de centrage 31 serré dans la pince 28.

Une fois la lentille 2 positionnée, cette dernière présente donc sa face convexe 20 pourvue des marquages imprimés 21 à 24 qui se trouvent en regard du support 18 (avec les marquages imprimés 21 à 24 masqués par le film opaque 33) et la face concave 25 en regard et à distance de la caméra 26.

L'utilisateur déplace ensuite à l'étape 102 l'élément mobile 14 de sa position escamotée à sa position de travail, c'est-à-dire qu'il translate vers le bas l'élément mobile 14 le long des poteaux de guidage 9 alors que l'élément fixe 13 reste en position.

Cet élément mobile 14 est donc déplacé jusqu'à obstruer totalement, ou presque, le support 18 et son environnement immédiat de sorte que l'espace interne délimité par le capot 4, la lentille 2 et les rampes lumineuses 15 qui s'y trouvent sont complètement dans le noir.

L'utilisateur active ensuite à l'étape 103 les rampes lumineuses 15 de manière à ce qu'elles diffusent de la lumière, comme indiqué précédemment.

La lumière provenant de ces rampes lumineuses 15 et pénétrant dans la masse 35 de la lentille 2 est rétrodiffusée puis l'image de cette lumière est captée à l'étape 104 par la caméra 26 qui est elle-même disposée à l'intérieur du capot 4.

La ou les images capturées à l'étape 104 sont envoyées à une unité de contrôle et de commande (non représentée, mais qui peut être intégrée à la caméra 26) pour la détermination par cette même unité à l'étape 106 d'une valeur d'écart E à partir d'une référence de position préalablement reçue à l'étape 105.

Cette référence de position est basée sur le fait que, comme indiqué ci-avant, la caméra 26 connaît la position du support 18 et donc du pion de positionnement et de centrage 31 lorsque ce dernier est serré dans la pince de serrage 28.

La valeur d'écart E correspond à un éventuel écart de positionnement entre les marquages imprimés 21 à 24 et le pion de positionnement et de centrage 31 sur lequel est montée ladite lentille ophtalmique 2 avant son surfaçage.

Cette valeur d'écart E est représentative d'une distance en translation et/ou d'une distance en rotation et/ou d'une distance radiale, prises indépendamment (plusieurs variables) voire prises en combinaison (une seule variable).

L'unité de contrôle et de commande est en outre configurée pour recevoir à l'étape 107 une valeur de seuil d'écart ES qui est prédéterminée, puis pour comparer à l'étape 108 cette valeur de seuil d'écart ES à la valeur d'écart E déterminée à l'étape 106.

Si le résultat de la comparaison faite à l'étape 108 est que la valeur d'écart E déterminée à l'étape 106 est supérieure ou égale à la valeur de seuil d'écart ES, alors l'unité de contrôle et de commande génère une alerte à l'étape 109 afin d'indiquer que le positionnement des marquages imprimés 21 à 24 est erroné par rapport au pion de positionnement et de centrage 31.

Cette alerte est en fait une information caractéristique pour formuler par exemple par un signal lumineux, un message, ou qui prévoit directement des mesures correctives à transmettre à une machine de surfaçage afin que cette dernière puisse redéfinir les paramètres de surfaçage en prenant en considération l'erreur de positionnement détectée.

Le message peut être affiché sur un écran (non représenté) du système 1, voire enregistré dans l'unité de contrôle et de commande puis stocké dans une base de données. Le cas échéant, c'est en fait la valeur de l'écart en translation et/ou en rotation et/ou en distance radiale (voire d'une combinaison) qui est enregistrée et stockée.

Ce message, ou cette valeur d'écart, peut ensuite être envoyé à une machine de surfaçage ou de détourage via une interface de communication client-serveur (non représentée) comportant un côté dit fournisseur et un autre côté dit client, ces deux côtés communicant via une interface internet ou réseau.

Le côté fournisseur comporte un serveur relié à l'unité de commande et de contrôle du système 1 et ce serveur est configuré pour communiquer avec l'interface internet ou réseau.

Le côté client est configuré pour communiquer avec l'interface internet ou réseau et est relié à une unité de contrôle et de commande du même type que celle du côté fournisseur ; et cette dernière unité de contrôle et de commande côté client est reliée à la machine de surfaçage (ou de détourage).

L'unité côté fournisseur envoie, par l'intermédiaire du serveur et de l'interface internet ou réseau, le message ou la valeur d'écart à l'unité côté client.

La détection d'un écart entre les marquages imprimés 21 à 24 et le pion de positionnement et de centrage 31 est particulièrement simple à détecter, voire à transmettre, grâce au système et au procédé de lecture optique décrits ci-dessus.

En outre, le procédé est particulièrement simple à mettre en oeuvre et le système est particulièrement commode à utiliser.

Le système et le procédé de lecture optique tels que décrits ci-dessus permettent donc de mettre un utilisateur en connaissance de l'éventuel écart qu'il y aurait entre ces marquages imprimés 21 à 24 et ce pion 31 de manière à pouvoir redéfinir les paramètres de surfaçage avant l'opération de surfaçage proprement dite.

Dans une variante illustrée, la caméra 26 ne sait pas exactement où est positionné le support 18 et par conséquent la position du pion de positionnement et de centrage 31.

Le cas échéant, une mire 40 illustrée à la figure 8, semblable à une cible, est disposée dans l'espace 29 délimité par la pince de serrage 28, sous le pion de positionnement et de centrage 31, et un étalonnage est réalisé grâce aux lignes de référence horizontale 41 et verticale 42 et grâce aux repères 43 et 44 marqués sur cette mire 40.

Dans des variantes non illustrées :
- il ne s'agit pas de vérifier le positionnement des marquages imprimés par rapport au pion de positionnement et de centrage avant surfaçage de la lentille, mais plutôt avant, voire après, le détourage de cette lentille ; lorsque cette vérification est mise en oeuvre après le détourage, cela permet de vérifier si au cours du détourage, le pion de positionnement et de centrage ne s'est pas déplacé en rotation (un désaxage est possible du fait du détourage de la périphérie de la lentille, lequel désaxage est alors lié au cisaillage d'un élément d'assujettissement du pion pour le détourage de cette lentille) ;
- la caméra n'est pas disposée tout le temps à la même position et, le cas échéant, un étalonnage est nécessaire à chaque utilisation afin de connaître la position de cette caméra par rapport au support pour recevoir la lentille ;
- la source de lumière ne comporte pas deux rampes lumineuses à diodes électroluminescentes, mais plus ou moins de rampes, voire une rampe annulaire entourant toute la tranche de la lentille ;
- la source de lumière n'est pas inclinée par rapport à la tranche de la lentille mais plutôt parallèle à cette dernière ;
- la source de lumière n'est pas à proximité immédiate de la tranche de la lentille (c'est-à-dire à une distance relativement faible), mais elle est plutôt disposée directement contre cette tranche ;
- l'élément masquant n'est pas un film opaque mais plutôt une coque permettant de recouvrir la face où sont les marquages imprimés ;
- les parois de côté du capot ne sont pas opaques mais elles sont plutôt teintées, plus ou moins sombres, ou bien elles sont transparentes ;
- les marquages imprimés ne sont pas réalisés sur la face convexe de la lentille mais plutôt sur la face concave de cette lentille ; plus généralement, les marquages imprimés sont réalisés sur la face avant et/ou arrière d'une lentille ;
- un étalonnage est nécessaire pour la déviation prismatique due à la traversée du dioptre que représente l'interface entre la matière de la lentille et la face disposée en regard de la caméra ; cet étalonnage peut être réalisé par déduction par traitement de l'image vue par la caméra, par exemple grâce à la distance entre différents traits d'un des marquages imprimés 22 à 24 ou encore par le passage au travers d'une matrice de Hartmann ; et/ou
- le système de lecture optique est différent de celui représenté aux figures 1 et 5, il ne comporte pas de châssis ni de capot mais il s'agit simplement d'un trépied sur lequel, de manière optionnelle, vient se positionner automatiquement un pion de positionnement et de centrage.

On rappelle plus généralement que l'invention ne se limite pas aux exemples décrits et représentés.

## Revendications

1. Système de lecture optique de marquages imprimés sur une face (20) d'une lentille ophtalmique (2), ledit système (1) comportant :
- un dispositif de capture d'images (26) ;
- une source de lumière (15) ;
- un support (18, 31) pour recevoir ladite lentille ophtalmique (2) ; avec ledit dispositif de capture d'images (26) et ladite source de lumière (15) et ledit support (18, 31) qui sont configurés pour que, quand ladite lentille ophtalmique (2) est reçue par ledit support (18, 31), ladite source de lumière (15) éclaire ladite lentille (2) en rendant lesdits marquages (21-24) visibles audit dispositif de capture d'images (26) ;
**caractérisé en ce que** ledit système (1) comporte en outre un élément mobile (14) sur lequel est fixée ladite source de lumière (15), lequel élément mobile (14) admet une position de travail dans laquelle ledit élément mobile (14) entoure au moins partiellement ledit support (18) et dans laquelle ladite source de lumière (15) regarde ledit support (18, 31), et une position escamotée dans laquelle ledit élément mobile (14) est à distance dudit support (18, 31), avec ladite source de lumière (15) et ledit support (18, 31) qui sont configurés pour que, dans ladite position de travail, quand ladite lentille ophtalmique (2) est reçue par le ledit support (18, 31) avec un élément masquant (33) qui recouvre lesdits marquages (21-24), ladite source lumière (15) éclaire une tranche (34) de ladite lentille (2) de sorte que la lumière pénètre dans une masse (35) de ladite lentille (2) et atteigne ledit élément masquant (33) au travers de ladite lentille (2).

2. Système selon la revendication 1, **caractérisé en ce que** ladite source de lumière est formée par au moins une rampe lumineuse (15) inclinée par rapport à ladite tranche (34) de ladite lentille (2) en fonction d'une inclinaison générale de ladite face (20) de ladite lentille (2) pourvue desdits marquages imprimés (21-24).

3. Système selon l'une des revendications 1 ou 2, **caractérisé en ce que** ladite source de lumière est formée par deux rampes lumineuses (15) disposées en regard l'une de l'autre et de part et d'autre de ladite face (20) de ladite lentille (2) pourvue desdits marquages imprimés (21-24).

4. Système selon l'une quelconque des revendications 1 à 3, **caractérisé en ce que** ladite source de lumière est formée par une rampe lumineuse annulaire disposée autour de ladite lentille.

5. Système selon l'une quelconque des revendications 1 à 4, **caractérisé en ce que** ledit dispositif de capture d'images est formé par une caméra (26) pourvue d'un objectif (37) et d'un capteur (36) configuré pour capter la lumière provenant de ladite source de lumière (15) et rétrodiffusée par ledit élément masquant (33).

6. Système selon l'une quelconque des revendications 1 à 5, **caractérisé en ce que** ledit support pour recevoir ladite lentille ophtalmique comporte une pince de serrage (28) admettant une position ouverte et une position fermée et comportant un espace de réception (29) prévu pour recevoir ladite lentille ophtalmique (2) quand ladite pince (28) est en position ouverte.

7. Système selon l'une quelconque des revendications 1 à 6, **caractérisé en ce que** ledit support pour recevoir ladite lentille ophtalmique comporte un espace de réception (29) prévu pour recevoir au moins partiellement un pion de positionnement et de centrage (31) sur lequel est fixée ladite lentille ophtalmique (2), avec ledit élément masquant (33) qui est interposé entre ledit pion (31) et ladite lentille (2).

8. Système selon l'une quelconque des revendications 1 à 7, **caractérisé en ce qu'**il comporte en outre une mire de référence (40) prévue pour calibrer ledit dispositif de capture d'images (26).

9. Système selon l'une quelconque des revendications 1 à 8, **caractérisé en ce que** ledit élément masquant est formé par un film opaque (33) configuré pour recouvrir au moins partiellement ladite face (20) de ladite lentille (2) pourvue desdits marquages imprimés (21-24).

10. Système selon l'une quelconque des revendications 1 à 9, **caractérisé en ce qu'**il comporte en outre un châssis (3) ayant une base (5) sur laquelle repose ledit support (18, 31) pour recevoir ladite lentille (2) ainsi qu'une paroi de fond (7) reliée à ladite base (5) et sur laquelle est monté ledit dispositif de capture d'images (26), et avec ledit élément mobile (14) qui est monté sur ledit châssis (3).

11. Système selon la revendication 10, **caractérisé en ce qu'**il comporte en outre un capot (4) ayant un élément fixe (13) ainsi que ledit élément mobile (14) déplaçable en translation par rapport audit élément fixe (13), avec ledit capot (4) qui présente des parois opaques.

12. Procédé de lecture optique de marquages imprimés sur une face (20) d'une lentille ophtalmique (2), à l'aide d'un système (1) selon l'une quelconque des revendications 1 à 11, ledit procédé comportant les étapes suivantes :
- fourniture d'une lentille ophtalmique (2) ayant sur une face (20) des marquages imprimés (21-24) recouverts par un élément masquant (33) ;
- dans une position escamotée d'un élément mobile (14) dudit système (1) où ledit élément mobile (14) est à distance d'un support (18, 31) dudit système (1) pour recevoir ladite lentille (2), introduction (101) au moins partielle de ladite lentille (2) dans ledit support (18, 31) ;
- déplacement (102) dudit élément mobile (14) de sa position escamotée à une position de travail dans laquelle une source de lumière (15) dudit système (1) portée par ledit élément mobile (14) est amenée à proximité d'une tranche (34) de ladite lentille (2) ;
- activation (103) de ladite source de lumière (15) pour éclairer ladite tranche (34) de ladite lentille (2) de sorte que la lumière pénètre dans une masse (35) de ladite lentille (2) et atteigne ledit élément masquant (33) au travers de ladite lentille (2) ;
- capture (104) par un dispositif de capture d'images (26) dudit système (1) de ladite lumière qui est rétrodiffusée par ledit élément masquant (33).

13. Procédé de lecture optique selon la revendication 12, **caractérisé en ce qu'**il comporte en outre les étapes suivantes :
- détermination (106), à partir de la capture d'images, d'une valeur d'un écart (E) de positionnement entre lesdits marquages imprimés (21-24) sur ladite face (20) de ladite lentille (2) et ledit support (18, 31) ;
- comparaison (108) de ladite valeur d'écart déterminée (E) à une valeur de seuil d'écart prédéterminée (ES) ;
- génération (109) d'une information caractéristique d'une alerte lorsque la valeur d'écart déterminée (E) est supérieure ou égale à la valeur de seuil d'écart prédéterminée (ES).

14. Procédé de lecture optique selon la revendication 13, **caractérisé en ce que** ladite valeur d'écart (E) est représentative d'une distance en translation et/ou d'une distance en rotation et/ou d'une distance radiale.

15. Procédé de lecture optique selon la revendication 14, **caractérisé en ce que** ladite valeur d'écart (E) est représentative d'une combinaison d'au moins deux desdites distances en translation, en rotation et radiale.

## Patentansprüche

1. System zum optischen Lesen von Markierungen, die auf eine Seite (20) einer ophthalmischen Linse (2) gedruckt sind, das System (1) umfassend:
- eine Bildaufnahmevorrichtung (26);
- eine Lichtquelle (15);
- einen Träger (18, 31) zur Aufnahme der ophthalmischen Linse (2); wobei die Bildaufnahmevorrichtung (26) und die Lichtquelle (15) und der Träger (18, 31) derart ausgelegt sind, dass, wenn die ophthalmische Linse (2) von dem Träger (18, 31) aufgenommen ist, die Lichtquelle (15) die Linse (2) beleuchtet, indem sie die Markierungen (21 bis 24) für die Bildaufnahmevorrichtung (26) sichtbar macht;
**dadurch gekennzeichnet, dass** das System (1) ferner ein bewegliches Element (14) umfasst, auf dem die Lichtquelle (15) befestigt ist, wobei das bewegliche Element (14) eine Arbeitsposition, in der das bewegliche Element (14) den Träger (18) zumindest teilweise umgibt, und in der die Lichtquelle (15) dem Träger (18, 31) zugewandt ist, und eine eingefahrene Position, in der das bewegliche Element (14) von dem Träger (18, 31) beabstandet ist, zulässt, wobei die Lichtquelle (15) und der Träger (18, 31) derart ausgelegt sind, dass in der Arbeitsposition, wenn die ophthalmische Linse (2) von dem Träger (18, 31) aufgenommen ist, wobei ein maskierendes Element (33) die Markierungen (21 bis 24) abdeckt, die Lichtquelle (15) einen Abschnitt (34) der Linse (2) beleuchtet, so dass das Licht in eine Masse (35) der Linse (2) eindringt und das maskierende Element (33) durch die Linse (2) erreicht.

2. System nach Anspruch 1, **dadurch gekennzeichnet, dass** die Lichtquelle von mindestens einer Leuchtrampe (15) gebildet ist, die bezogen auf den Abschnitt (34) der Linse (2) in Abhängigkeit von einer allgemeinen Neigung der Seite (20) der Linse (2) geneigt ist, die mit den gedruckten Markierungen (21 bis 24) versehen ist.

3. System nach einem der Ansprüche 1 oder 2, **dadurch gekennzeichnet, dass** die Lichtquelle von zwei Leuchtrampen (15) gebildet ist, die einander gegenüberliegend und beiderseits der Seite (20) der Linse (2) angeordnet sind, die mit den gedruckten Markierungen (21 bis 24) versehen ist.

4. System nach einem der Ansprüche 1 bis 3, **dadurch gekennzeichnet, dass** die Lichtquelle von einer ringförmigen Leuchtrampe gebildet ist, die um die Linse herum angeordnet ist.

5. System nach einem der Ansprüche 1 bis 4, **dadurch gekennzeichnet, dass** die Bildaufnahmevorrichtung von einer Kamera (26) gebildet ist, die mit einem Objektiv (37) und einem Sensor (36), der ausgelegt ist, das Licht einzufangen, das von der Lichtquelle (15) kommt und von dem maskierenden Element (33) rückgestreut wird, versehen ist.

6. System nach einem der Ansprüche 1 bis 5, **dadurch gekennzeichnet, dass** der Träger zur Aufnahme der ophthalmischen Linse eine Spannzange (28) umfasst, die eine geöffnete Position und eine geschlossene Position zulässt und einen Aufnahmeraum (29) zur Aufnahme der ophthalmischen Linse (2), wenn sich die Zange (28) in der geöffneten Position befindet, umfasst.

7. System nach einem der Ansprüche 1 bis 6, **dadurch gekennzeichnet, dass** der Träger zur Aufnahme der ophthalmischen Linse einen Aufnahmeraum (29) umfasst, der dafür vorgesehen ist, zumindest teilweise einen Positionierungs- und Zentrierungsstift (31) aufzunehmen, auf dem die ophthalmische Linse (2) befestigt ist, wobei das maskierende Element (33) zwischen dem Stift (31) und der Linse (2) angeordnet ist.

8. System nach einem der Ansprüche 1 bis 7, **dadurch gekennzeichnet, dass** es ferner ein Bezugsmuster (40) umfasst, das dafür vorgesehen ist, die Bildaufnahmevorrichtung (26) zu kalibrieren.

9. System nach einem der Ansprüche 1 bis 8, **dadurch gekennzeichnet, dass** das maskierende Element von einem lichtundurchlässigen Film (33) gebildet ist, der ausgelegt ist, die Seite (20) der Linse (2), die mit den gedruckten Markierungen (21 bis 24) versehen ist, zumindest teilweise abzudecken.

10. System nach einem der Ansprüche 1 bis 9, **dadurch gekennzeichnet, dass** es ferner ein Gestell (3) umfasst, das ein Unterteil (5), auf dem der Träger (18, 31) zur Aufnahme der Linse (2) aufliegt, sowie eine Bodenwand (7), die mit dem Unterteil (5) verbunden ist, und auf der die Bildaufnahmevorrichtung (26) angebracht ist, aufweist, und wobei das bewegliche Element (14) an dem Gestell (3) angebracht ist.

11. System nach Anspruch 10, **dadurch gekennzeichnet, dass** es ferner eine Abdeckhaube (4) umfasst, die ein festes Element (13) sowie das bewegliche Element (14), das bezogen auf das feste Element (13) verschiebbar beweglich ist, aufweist, wobei die Abdeckhaube (4) lichtundurchlässige Wände aufweist.

12. Verfahren zum optischen Lesen von Markierungen, die auf eine Seite (20) einer ophthalmischen Linse (2) gedruckt sind, mithilfe eines Systems (1) nach einem der Ansprüche 1 bis 11, das Verfahren umfassend die folgenden Schritte:
- Bereitstellen einer ophthalmischen Linse (2), die auf einer Seite (20) gedruckte Markierungen (21 bis 24) aufweist, die von einem markierenden Element (33) abgedeckt sind;
- in einer eingefahrenen Position eines beweglichen Elements (14) des Systems (1), wo das bewegliche Element (14) von einem Träger (18, 31) des Systems (1) zur Aufnahme der Linse (2) beabstandet ist, zumindest teilweises Einführen (101) der Linse (2) in den Träger (18, 31);
- Bewegen (102) des beweglichen Elements (14) aus seiner eingefahrenen Position in eine Arbeitsposition, in der eine Lichtquelle (15) des Systems (1), die von dem beweglichen Element (14) getragen wird, in die Nähe eines Abschnitts (34) der Linse (2) gebracht wird;
- Aktivieren (103) der Lichtquelle (15), um den Abschnitt (34) der Linse (2) zu beleuchten, damit das Licht in eine Masse (35) der Linse (2) eindringt und das maskierende Element (33) durch die Linse (2) erreicht;
- Einfangen (104), durch eine Bildaufnahmevorrichtung (26) des Systems (1), des Lichts, das durch das maskierende Element (33) rückgestreut wird.

13. Verfahren zum optischen Lesen nach Anspruch 12, **dadurch gekennzeichnet, dass** es ferner die folgenden Schritte umfasst:
- Bestimmen (106), auf Grundlage der Aufnahme von Bildern, eines Werts einer Positionierungsabweichung (E) zwischen den gedruckten Markierungen (21 bis 24) auf der Seite (20) der Linse (2) und dem Träger (18, 31);
- Vergleichen (108) des bestimmten Abweichungswerts (E) mit einem vorbestimmten Abweichungs-Schwellenwert (ES);
- Erzeugen (109) einer Information, die für einen Alarm charakteristisch ist, wenn der bestimmte Abweichungswert (E) größer als der vorbestimmte Abweichungs-Schwellenwert (ES) oder gleich diesem ist.

14. Verfahren zum optischen Lesen nach Anspruch 13, **dadurch gekennzeichnet, dass** die Positionierungsabweichung (E) für einen Translationsabstand und/oder einen Rotationsabstand und/oder einen Radialabstand repräsentativ ist.

15. Verfahren zum optischen Lesen nach Anspruch 14, **dadurch gekennzeichnet, dass** die Positionierungsabweichung (E) für eine Kombination von mindestens zweien des Translations-, Rotations und Radialabstands repräsentativ ist.

## Claims

1. Optical system for reading marks printed on a face (20) of an ophthalmic lens (2), said system (1) comprising:
- an image capturing device (26);
- a light source (15); and
- a holder (18, 31) for receiving said ophthalmic lens (2);
with said image capturing device (26) and said light source (15) and said holder (18, 31) being configured so that, when said ophthalmic lens (2) is received by said holder (18, 31), said light source (15) illuminates said lens (2), thereby making said marks (21-24) visible to said image capturing device (26);
**characterized in that** said system (1) furthermore comprises a movable element (14) to which said light source (15) is fastened, which movable element (14) has a working position in which said movable element (14) at least partially encircles said holder (18) and in which said light source (15) faces said holder (18, 31), and a retracted position in which said movable element (14) is located a distance away from said holder (18, 31), with said light source (15) and said holder (18, 31) being configured so that, in said working position, when said ophthalmic lens (2) is received by said holder (18, 31) with a masking element (33) that covers said marks (21-24), said light source (15) illuminates an edge face (34) of said lens (2) so that the light penetrates into a bulk (35) of said lens (2) and reaches said masking element (33) through said lens (2) .

2. System according to Claim 1, **characterized in that** said light source is formed by at least one lighting strip (15) that is inclined relative to said edge face (34) of said lens (2) depending on a general inclination of said face (20) of said lens (2) provided with said printed marks (21-24).

3. System according to either of Claims 1 and 2, **characterized in that** said light source is formed by two lighting strips (15) arranged facing each other and on either side of said face (20) of said lens (2) provided with said printed marks (21-24).

4. System according to any one of Claims 1 to 3, **characterized in that** said light source is formed by an annular lighting strip arranged around said lens.

5. System according to any one of Claims 1 to 4, **characterized in that** said image capturing device is formed by a video camera (26) provided with an objective (37) and a sensor (36) configured to capture the light originating from said light source (15) and backscattered by said masking element (33).

6. System according to any one of Claims 1 to 5, **characterized in that** said holder, in order to receive said ophthalmic lens, comprises a clamping clip (28) having an open position and a closed position and comprising a receiving space (29) provided to receive said ophthalmic lens (2) when said clip (28) is in its open position.

7. System according to any one of Claims 1 to 6, **characterized in that** said holder, in order to receive said ophthalmic lens, comprises a receiving space (29) provided to receive at least partially a positioning and centering pin (31) to which is fastened said ophthalmic lens (2), with said masking element (33) being interposed between said pin (31) and said lens (2) .

8. System according to any one of Claims 1 to 7, **characterized in that** it furthermore comprises a reference test pattern (40) provided for calibrating said image capturing device (26).

9. System according to any one of Claims 1 to 8, **characterized in that** said masking element is formed by an opaque film (33) configured to at least partially cover said face (20) of said lens (2) provided with said printed marks (21-24).

10. System according to any one of Claims 1 to 9, **characterized in that** it furthermore comprises a frame (3) having a base (5) on which said holder (18, 31) rests in order to receive said lens (2), and a back wall (7) connected to said base (5) and on which said image capturing device (26) is mounted, and with said movable element (14) being mounted on said frame (3).

11. System according to Claim 10, **characterized in that** it furthermore comprises a cover (4) having a stationary element (13) and said movable element (14) translationally movable relative to said stationary element (13), with said cover (4) having opaque walls.

12. Optical method for reading marks printed on a face (20) of an ophthalmic lens (2), using a system (1) according to any one of Claims 1 to 11, said method comprising the following steps:
- providing an ophthalmic lens (2) having on a face (20) printed marks (21-24) covered with a masking element (33);
- in a retracted position of a movable element (14) of said system (1), in which position said movable element (14) is located a distance away from a holder (18, 31) of said system (1) in order to receive said lens (2), introducing (101) said lens (2) at least partially into said holder (18, 31);
- moving (102) said movable element (14) from its retracted position to a working position in which a light source (15) of said system (1), which light source (15) is borne by said movable element (14), is brought near to an edge face (34) of said lens (2);
- activating (103) said light source (15) in order to illuminate said edge face (34) of said lens (2) so that the light penetrates into a bulk (35) of said lens (2) and reaches said masking element (33) through said lens (2); and
- capturing (104), via an image capturing device (26) of said system (1), said light that is backscattered by said masking element (33).

13. Optical reading method according to Claim 12, **characterized in that** it furthermore comprises the following steps:
- determining (106), from the image capture, a value of a positioning discrepancy (E) between said marks (21-24) printed on said face (20) of said lens (2) and said holder (18, 31);
- comparing (108) said determined discrepancy value (E) to a preset discrepancy threshold value (ES); and
- generating (109) characterizing information for an alarm when the determined discrepancy value (E) is higher than or equal to the preset discrepancy threshold value (ES).

14. Optical reading method according to Claim 13, **characterized in that** said discrepancy value (E) is representative of a translational distance and/or a rotational distance and/or a radial distance.

15. Optical reading method according to Claim 14, **characterized in that** said discrepancy value (E) is representative of a combination of at least two of said translational, rotational and radial distances.
